# EUROPEAN PATENT SPECIFICATION

(11) **EP 1 240 711 B1**
(45) Date of publication and mention of the grant of the patent: **04.02.2009**
(21) Application number: 00984915.9
(22) Date of filing: 18.12.2000
(51) Int. Cl.: H02P 7/00

(54) **METHOD AND SYSTEM FOR PROGRAMMING A MOTOR CONTROLLER**
VERFAHREN UND SYSTEM ZUR PROGRAMMIERUNG EINES MOTORREGELERS
PROCEDE ET SYSTEME DE PROGRAMMATION D'UNE UNITE DE COMMANDE DE MOTEUR

(30) Priority: 20.12.1999 DK 182799
(43) Date of publication of application: 18.09.2002
(73) Proprietor: Danfoss Drives A/S, 6300 Graasten (DK)
(72) Inventor: OLESEN, Klaus, DK-6400 Sønderborg (DK); TØNNES, Michael, DK-6400 Sønderborg (DK); KROGH, Egon, DK-6400 Sønderborg (DK)
(74) Representative: Inspicos A/S
(86) International application number: PCT/DK2000/000707
(87) International publication number: WO 2001/047099

(56) References cited:
- EP-A1- 0 936 729
- WO-A1-98/37493
- WO-A1-99/13418
- DE-A1- 19 826 458

## Description

The invention concerns a method and a system for programming a motor controller.

Motor controllers are used for speed control of electromotors and contain a considerable amount of programmable control electronics. Motor controllers are available in different types, as for example frequency converters, servo-drives and DC-drives. Programming can take place either directly from the control panel on the motor controller or from a PC which is connected to the motor controller via a serial connection or via a local network. In the following, "programming" means configuration of the motor controller before the final start-up. Typically about 300 parameters can be set, and the PC with its graphical user interface has turned out to be a viable alternative to the often lengthy programming when using the control panel.

Today's manufacturers of motor controllers develop and offer programming software which can be installed on the PC, on which a configuration file is generated. Via the programming software the operator tailors the motor controller to its tasks and the software generates a configuration file which is sent - downloaded - to the motor controller.

The programming software can be used at start-up of a single motor controller but has its strong point when programming a whole series of motor controllers. Often the configuration file can be used again.

One problem with the programming software is that it gradually gets out of date. When new motor controller types are delivered, the obsolete programming software will not at all or only insufficiently be able to generate a configuration file which exploits all new possibilities. The operator will typically have to update the programming software which is placed on his own PC or on the network, however, a certain uncertainty will prevail whether it is the newest version or not. Add to this the practical administration as well as time consumption in keeping the programming software up-to-date.

A solution to this problem has been made by the motor controller manufacturer Lenze from Germany, who delivers a drive having a programming software that can be updated from the Internet. From the home page of this manufacturer it is thus possible to select a data file for precisely the motor controller which is to be programmed and, thereafter, to download the data file to the PC. When executing the file containing data the programming software is updated in the area which concerns the actual motor controller, and it is now possible by means of the programming software to generate an updated configuration file. The disadvantage with this solution is, that the remaining parts of the programming software remain non-updated. Furthermore, in worst case the updating only takes place on the operator's own PC, so that the fellow colleagues have to go through the same procedure, which is time-consuming and creates uncertainty when it comes to administration of software versions.

As for motor controllers which are connected to a communication network, however, it would in some cases be advantageous if the PC as a programming tool could be totally omitted. This would accelerate the installation of a larger number of drives.

DE-A 198 26 458 discloses a method and device from which the subject-matter of independent claims 1 and 8 differs by feature (B).

The task to be solved with this invention is to reduce the resource- and time-consumption spent by the motor controller customer when updating the programming software, and to remove the customer's uncertainty as to whether the programming software and the basic motor controller data are present in their latest version.

Another task is to make configuration of motor controllers possible in a way, that the operator can omit the use of a PC.

These tasks are fulfilled with a method as described in claim 1 where the operator, typically the customer, via a user interface interactively generates a configuration file on an Internet server which is provided by the motor controller supplier. The operator then downloads the configuration file to the motor controller. The Internet server contains the following program units which directly or indirectly are being activated by the operator:
A) interactive programming software enabling the selection of configuration parameters
B) a database containing motor controller data
C) a compiler for generating the configuration file from selected configuration parameters and related motor controller data
D) a transmitter unit for transferring the configuration file via the Internet.

The advantage of this solution is that the software and the motor controller data are concentrated in one place, namely on the Internet server of the motor controller supplier. The customer has got an unambiguous working platform. To the customer this means that he only has to bear in mind one web-address, and that the task for updating of the programming software as well as uncertainty about the validity of data has been removed. The customer need no longer use resources on updating as this task has now been moved to the drives supplier.

To the supplier of motor controllers this solution means, that the task of updating the software and maintaining the data is now advantageously concentrated in one place.

In locating all programming units for the configuration on the Internet server, the PC is being relieved compared with the traditional solution where the programming software is placed on the hard disk. With the solution according to the invention the installation of a special programming software is no longer required; instead a standard web-browser as mentioned in claim 2 can be used.

Instead of using a special communication software between the motor controller and the PC in order to transmit the configuration file from the PC, the web-browser can advantageously be used to transmit the configuration file to the motor controller as described in claim 3

The configuration file is generated directly on the Internet server. Via the interactive programming software which was previously located on the local PC but now has been moved to the server, the operator sets the parameters that are to be used in the motor controller. The setup made is based on a number of databases containing the latest data for the individual motor controllers. After the setup is finished, a compiler generates the configuration file in a machine language which can be interpreted directly by the motor controller. When the configuration file is generated directly on the server and then stored in a special customers' library it is ensured that also other operators at the customer's have direct access to the file.

Furthermore, directly generating the configuration file on the server means that it is now possible to configure the motor controller directly from the panel of the motor controller via the Internet server provided that the motor controller is connected to the Internet. This is the essence of claim 4

Claim 5 describes the first contact between the motor controller and the server where the motor controller transmits an identification code which states the type of user interface on the motor controller and/or the type of motor controller.

The programming software will then adjust itself according to the identification code, and this is especially advantageous in cases where only small or no graphical displays at all are mounted on the motor controller.

In order not to increase the cost of manufacturing by including communication electronics into the motor controller, the communication electronics as described in claim 6 can advantageously be placed externally in a communication interface which on one side is connected to the motor controller and on the other side to a PC or the Internet server.

Instead of using a specially manufactured communication interface from the motor controller supplier a portable graphical user interface as for example a mobile telephone can be used. This is the essence of claim 7

Claims 8, 9,10 and 11 describe a system according to the invention.

The invention is illustrated in Figure 1 which shows a first embodiment of the invention, and in Figure 2 which shows a second embodiment. Figure 3 gives an example of a screen view from the programming software.

In the following the invention will be described in detail.

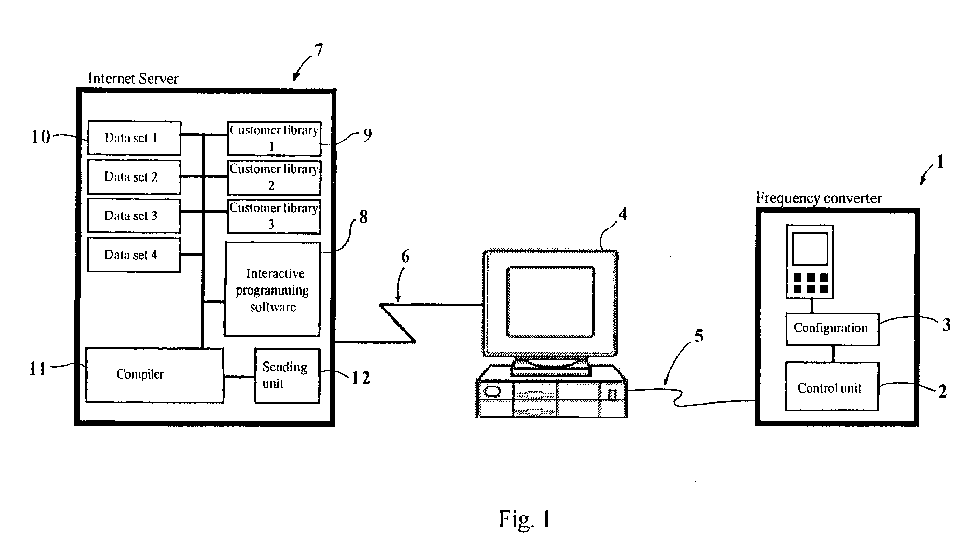

Figure 1 shows a motor controller in the form of a frequency converter 1 which contains a control unit 2 and a configuration unit 3. The configuration takes place from a portable computer or a stationary PC 4 via a serial connection 5. The PC has an Internet connection 6 which via the TCP/IP protocol makes the connection to an Internet server 7. The preferred server is a Microsoft^{®} Internet server. The PC is provided with a standard web-browser as for example Microsoft's Internet Explorer^{®}. From the factory the frequency converter is delivered with the standard configuration loaded into the configuration unit 3, which is accessed by the control unit that has an ASIC or a microcontroller as central part. The configuration unit 3 consists of a memory (EEPROM), and by downloading a new configuration file into the memory, the frequency converter can be programmed to other tasks. Thus, the customer will be able to differentiate originally identical frequency converters to different tasks such as pump, blower or hoist/lower-applications merely by changing the configuration file.

The configuration file which is downloaded from the Internet server can as shown be sent to the frequency converter via a serial connection. However, it will also be possible to send the file via an Internet connection or via a local area network. It will be quite advantageous for the operator if the configuration file can be sent directly from the standard browser to the frequency converter, for example by activating the 'print'-function of the browser. Specially developed transmitting software made by the supplier is, therefore, not required.

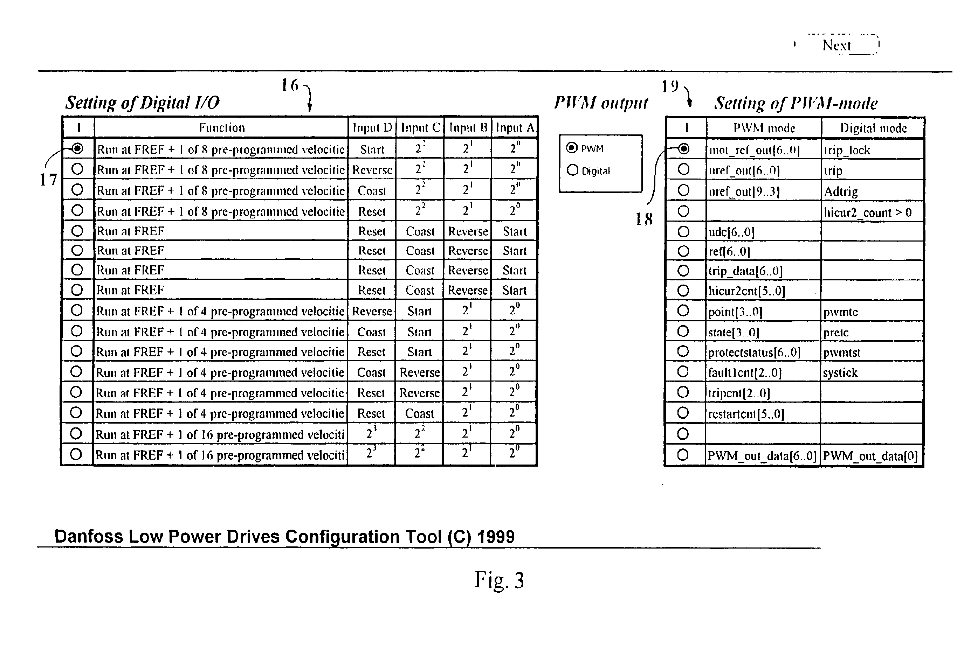

The Internet server 7, which is addressed by means of an IP address, contains an interactive programming software 8. "Interactive" means that the choice of the operator is influencing upon the behaviour of the program as well as the contents of the finally generated configuration file. The invention herein differs from prior art in that the configuration files ("drivers") on the Internet normally are found in a rigid, finished and non-programmable form. An example of a screen view from the interactive programming software is shown in Figure 3. Interactive programming software like this can be made by using Microsofts software tool "Frontpage^{®}" for producing HTML-pages. Here e.g. socalled WebBot-components can be used in order to add preprogrammed functionality to the web page. Figure 3 shows a screen picture of a configuration sequence which has already started. After having started up the program the operator has given in the serial number of the frequency converter which unambiguously identifies the converter on the server 7 of the supplier, and makes the interactive programming software pick up the latest frequency converter data from databases on the server.

On the screen picture the operator has in table 16 selected position 17 so that a reference signal Fref will be added to an already stored speed, which is selected based on a binary combination of ON-OFF signals on the input terminals A-C. Also, there has to be a start-signal on input terminal D.

In table 19 the operator has selected position 18 which effects that the frequency converter transmits a PWM signal to a status output where for example an indicating instrument is connected.

On this single screen picture there are 34 different parameters which can be selected and combined differently, and the operator proceeds to the next step by activating the button "Next". On the following screen pictures it will be possible to set parameters like starting torque and ramp-up and ramp-down times and to select a speed profile (for example linear or S-curve). By using dynamic HTML techniques the web pages following the one shown in Figure 3 is programmed to only show relevant parameters when compared to the choices made earlier by the operator. This makes creation of the configuration file user friendly. Thus, based on the large number of possible parameters to be set, there are a multitude of variations which enables product differentiation by means of the configuration file.

The Internet server 7 (Figure 1) contains data sets 10 which contain the latest data for the frequency converter. It may be thermal data and electric data, but also information about new programmable parameters. Further, one data set can contain application specific parameters for e.g. hoist-and-lower applications whereas another set contains data to be used in pump applications. Application specific data sets are to be used for general purpose motor controllers, which use the same common hardware but are tailored to their task by means of the configuration file. The data sets 10 are stored in the file format of Microsoft's database program "Access^{®}".

The customer libraries 9 make it possible for the operator to store the generated configuration file on the server in order that he can get the file on demand, or that other operators at the customer's place can make use of the file. The customer will, of course, also be able to store the file on his own PC.

The compiler 11 is the software unit that converts the selected parameter-settings into the final configuration file being a code which can be interpreted by the ASIC or microcontroller of the control unit in the frequency converter. This compiler is preferably produced in the programming code Java^{®} or placed on the server in the form of a CGI program (Control Graphic Interface), thus being in a hex- or binary format. The transmitting unit 12 is the program unit by means of which the configuration file can be downloaded from the server over the Internet to the PC. This unit is made in HTML language or as a Java script.

After the user has been through the interactive programming software, which during parameterization has fetched data about the frequency converter in the database 10, the user presses the "Finish" button (not shown) and the compiler generates the configuration file. This file typically has a size of 2 kB, and is now ready for download.

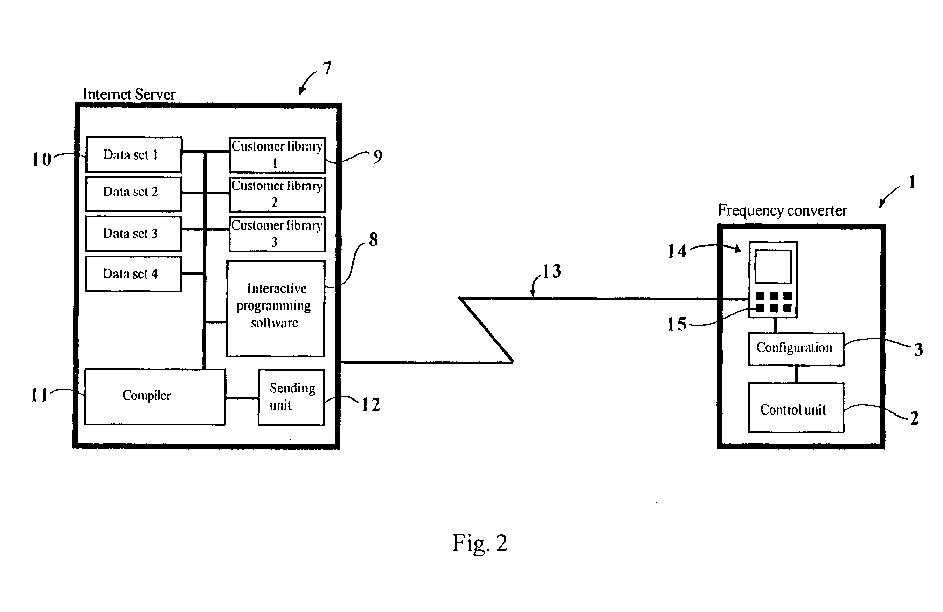

Figure 2 describes a second embodiment of the invention. The PC is here completely left out, and instead the frequency converter is connected directly to the Internet server 7 via the Internet connection 13. This connection is not necessarily permanent, but can be provisionally established when the frequency converter is to be installed. Instead of using the PC as an user interface, the panel 14 of the frequency converter is used. This panel often has a graphical display. Once the connection is established, the interactive programming software will be shown in the graphic display of the frequency converter. A modification of the screen display in relation to Figure 3 is required as the graphic display is typically considerably smaller than a PC screen so that the entire web page cannot be shown. However, solutions to this problem have already been found by manufacturers within the mobile telephone industry by modifying the HTML format into another format (called Tagged Text Markup Language, TTML), which shows only the parts of a web-page that has been tagged by the owner of the web-page.

When the frequency converter begins the communication with the Internet server, it first transmits an identification code that informs the server about the attached frequency converter type as well as the display type, whereafter the server executes a modified version of the interactive programming software, which means a version, that differs from the PC based version. The operator can then generate and download the configuration file from the server by means of the panel buttons 15.

A third embodiment (not shown) concerns the type of frequency converters which has no or almost no human user interface. This type can also be connected to the Internet server according to the invention, and via so-called dip-switches on the frequency converter the operator can select its settings which following an identity code is sent to the server which confirm receipt with a newly generated configuration file which is downloaded by the converter.

Common to the three embodiments described and the invention in general is the opportunity to place a communication interface between the PC and the motor controller or between the Internet server and the motor controller. The communication interface contains all the communication hardware and establishes the connection between the motor controller and the PC or between the motor controller and the Internet server. The communication interface may possibly also have a user interface. The advantage of this solution is that the motor controller can be manufactured at a lower price because the communication hardware is not built into the apparatus.

As a communication interface a standard mobile telephone or other wireless portable graphic user interfaces can be used. As the motor controller is connected to the Internet server via an ordinary phone-connection or connected to a PC, generating the configuration file can be done wireless, and also downloading can be executed from this user interface.

## Claims

1. A method for programming a motor controller where an operator before start-up of the motor controllers generates a configuration file which is sent to the motor controller whereby the operator via a user interface interactively generates the configuration file on an Internet server and then downloads the configuration file to the motor controller, and where the operator on the Internet server performs the steps of
A) using an interactive programming software for the selection of configuration parameters
B) accessing a database containing data about motor controllers, which database is acessed and updated via the Internet by a manufacturer of the motor controller
C) using a compiler which generates the configuration file from selected configuration parameters and related data about motor controllers; and
D) using a transmitter unit for sending the configuration file via the Internet

2. A method according to claim 1 **characterized in that** the user interface is a PC which contains Internet-browser-software, that the motor controller communicates with the PC, that the PC communicates with the Internet-server and that the operator via the Internet-browser-software activates the elements A-D.

3. Method according to claim 2 **characterized in that** the Internet-browser software on activation of the transmitter unit on the Internet-server downloads the configuration file directly to the motor controller.

4. A method according to claim 1 **characterized in that** the user interface is placed on the motor controller and that the program units A-D of the Internet-server are activated from this user interface.

5. A method according to claim 4 **characterized in that** the motor controller informs the Internet-server about the type of the user interface and/or the type of motor controller.

6. A method according to one of the previous claims **characterized in that** the motor controller communicates via a communication interface which is connected with the motor controller on one side and a PC or the Internet server on the other side.

7. Method according to claim 6 **characterized in that** the communication interface is a portable graphical user interface as for example a mobile telephone and that the portable graphical user interface is wirelessly connected with the motor controller or the PC or the Internet server.

8. System for programming a motor controller where the motor controller is programmed with a configuration file which is sent to the motor controller whereby the system contains a user interface (4,14) and that the configuration file is generated on an Internet server (7) via this user interface, and that the Internet server contains the following elements:
(A) an interactive programming software (8) for the selection of configuration parameters
(B) a database (10) containing data about motor controllers, which database is acessed and updated via the Internet by a manufacturer of the motor controller
(C) a compiler (11) for generating the configuration file from selected configuration parameters and relevant data about motor controllers
(D) a transmitting unit (12) for sending the configuration file via the Internet

9. System according to claim 8 **characterized in that** the user interface is a PC (4) with Internet-browser-software, that the motor controller (1) communicates with the PC, that the PC communicates with the Internet-server (7) and that an operator via the Internet-browser-software activates the elements A-D (8,10,11,12).

10. System according to claim 8 **characterized in that** the user interface (14) is placed on the motor controller (1), or in a portable communication unit outside the motor controller, and that the programming units A-D (8,10,11,12) of the Internet server are activated from this user interface.

11. System according to one of the claims 8-10 **characterized in that** the database (10) incorporates application specific data.

## Patentansprüche

1. Ein Verfahren zur Programmierung einer Motorsteuerung, wobei ein Betreiber vor Start der Motorsteuerung eine Konfigurationsdatei erzeugt, die der Motorsteuerung zugeführt wird, wobei der Betreiber über eine Brauchergrenzfläche interaktiv die Konfigurationsdatei auf einem Internetserver erzeugt, und dann die Konfigurationsdatei in die Motorsteuerung eingibt, und wobei der Betreiber am Internetserver die folgenden Stufen durchführt:
A) Anwendung einer interaktiven Programmierungssoftware zum Auswählen von Konfigurationsparametern,
B) Öffnen einer Datenbank mit Daten über Motorsteuerungen, die über das Internet von einem Motorsteuerungshersteller ajourgeführt wird,
C) Anwendung eines Kompilators, der die Konfigurationsdatei aus ausgewählten Konfigurationsparametern und entsprechenden Daten über Motorsteuerungen erzeugt; und
D) Anwendung einer Übertragungseinheit zum Senden der Konfigurationsdatei über das Internet.

2. Verfahren nach Anspruch 1, **dadurch gekennzeichnet, dass** die Brauchergrenzfläche ein PC mit einer Internetbrowsersoftware ist, dass die Motorsteuerung mit dem PC verkehrt, dass der PC mit dem Internetserver verkehrt, und dass der Betreiber über die Internetbrowsersoftware die Elemente A-D aktiviert.

3. Verfahren nach Anspruch 2, **dadurch gekennzeichnet, dass** die Internetbrowsersoftware bei Aktivierung der Übertragungseinheit des Internetservers die Konfigurationsdatei direkt in die Motorsteuerung eingibt.

4. Verfahren nach Anspruch 1, **dadurch gekennzeichnet, dass** die Brauchergrenzfläche an der Motorsteuerung angeordnet ist und dass die Programmeinheiten A-D des Internetservers von dieser Brauchergrenzfläche aktiviert werden.

5. Verfahren nach Anspruch 4, **dadurch gekennzeichnet, dass** die Motorsteuerung dem Internetserver den Braucherinterfacetyp und/oder den Motorsteuerungstyp mitteilt.

6. Ein Verfahren nach einem der vorhergehenden Ansprüche, **dadurch gekennzeichnet, dass** die Motorsteuerung über eine Kommunikationsgrenzfläche verkehrt, die einerseits mit der Motorsteuerung und andererseits mit einem PC oder dem Internetserver verbunden ist.

7. Verfahren nach Anspruch 6, **dadurch gekennzeichnet, dass** die Kommunikationsgrenzfläche eine tragbare, graphische Brauchergrenzfläche ist, wie z.B. ein Handy, und dass die tragbare, graphische Brauchergrenzfläche mit der Motorsteuerung oder dem PC oder dem Internet-server drahtlos verbunden ist.

8. System zur Programmierung einer Motorsteuerung, wobei die Motorsteuerung mit einer Konfigurationsdatei programmiert wird, die der Motorsteuerung zugeführt wird, wobei das System eine Brauchergrenzfläche (4, 14) aufweist, die Konfigurationsdatei über diese Brauchergrenzfläche von einem Internetserver (7) erzeugt wird und der Internetserver die folgenden Elemente aufweist:
A) eine interaktive Programmierungssoftware (8) zum Auswählen von Konfigurationsparametern,
B) eine Datenbank (10) mit Daten über Motorsteuerungen, die über das Internet von einem Motorsteuerungshersteller geöffnet und ajourgeführt wird,
C) ein Kompilator (11) zur Erzeugung der Konfigurationsdatei aus ausgewählten Konfigurationsparametern und relevanten Daten über Motorsteuerungen,
D) eine Übertragungseinheit (12) zur Übertragung der Konfigurationsdatei über das Internet.

9. System nach Anspruch 8, **dadurch gekennzeichnet, dass** die Brauchergrenzfläche ein PC (4) mit Internetbrowsersoftware ist, dass die Motorsteuerung (1) mit dem PC verkehrt, dass der PC mit dem Internetserver (7) verkehrt und dass ein Betreiber über die Internetbrowsersoftware die Elemente A-D (8, 10, 11, 12) aktiviert.

10. System nach Anspruch 8, **dadurch gekennzeichnet, dass** die Brauchergrenzfläche (14) an der Motorsteuerung (1), oder in einer tragbaren Kommunikationseinheit außerhalb der Motorsteuerung angebracht ist, und dass die Programmierungseinheiten A-D (8, 10, 11, 12) des Internetservers von dieser Brauchergrenzfläche aus aktiviert werden.

11. System nach einem der Ansprüche 8-10, **dadurch gekennzeichnet, dass** die Datenbank (10) anwendungsspezifische Daten einbezieht.

## Revendications

1. Procédé de programmation d'une unité de commande de moteur où un opérateur, avant le démarrage de l'unité de commande de moteur, génère un fichier de configuration qui est envoyé à l'unité de commande de moteur, moyennant quoi l'opérateur, via une interface utilisateur, génère de manière interactive le fichier de configuration sur un serveur Internet et télécharge ensuite le fichier de configuration dans l'unité de commande de moteur, et où l'opérateur sur le serveur Internet exécute les étapes suivantes :
A) utiliser un logiciel de programmation interactif pour la sélection de paramètres de configuration ;
B) accéder à une base de données contenant des données concernant des unités de commande de moteur, laquelle base de données est accédée et mise à jour via Internet par un constructeur de l'unité de commande de moteur ;
C) utiliser un compilateur qui génère le fichier de configuration à partir de paramètres de configuration sélectionnés et des données connexes concernant des unités de commande de moteur ; et
D) utiliser une unité de transmission pour envoyer le fichier de configuration via Internet.

2. Procédé selon la revendication 1, **caractérisé en ce que** l'interface utilisateur est un PC qui contient un logiciel de navigateur Internet, **en ce que** l'unité de commande de moteur communique avec le PC, **en ce que** le PC communique avec le serveur Internet et **en ce que** l'opérateur active les éléments A-D via le logiciel de navigateur Internet.

3. Procédé selon la revendication 2, **caractérisé en ce que** le logiciel de navigateur Internet à l'activation de l'unité de transmission sur le serveur Internet télécharge le fichier de configuration directement dans l'unité de commande de moteur.

4. Procédé selon la revendication 1, **caractérisé en ce que** l'interface utilisateur est placée sur l'unité de commande de moteur et **en ce que** les unités de programme A-D du serveur Internet sont activées à partir de cette interface utilisateur.

5. Procédé selon la revendication 4, **caractérisé en ce que** l'unité de commande de moteur informe le serveur Internet sur le type d'interface utilisateur et/ou le type d'unité de commande de moteur.

6. Procédé selon l'une des revendications précédentes, **caractérisé en ce que** l'unité de commande de moteur communique via une interface de communication qui est connectée à l'unité de commande de moteur d'un côté et à un PC ou au serveur Internet de l'autre côté.

7. Procédé selon la revendication 6, **caractérisé en ce que** l'interface de communication est une interface utilisateur graphique portable telle que par exemple un téléphone mobile et que l'interface utilisateur graphique portable est connectée sans fil à l'unité de commande de moteur d'un côté ou au PC ou au serveur Internet.

8. Système de programmation d'une unité de commande de moteur où un opérateur, avant le démarrage de l'unité de commande de moteur, génère un fichier de configuration qui est envoyé à l'unité de commande de moteur, moyennant quoi le système comprend une interface utilisateur (4, 14) et le fichier de configuration est généré sur un serveur Internet (7) via cette interface utilisateur et le serveur Internet contient les éléments suivants :
A) un logiciel de programmation interactif (8) pour la sélection de paramètres de configuration ;
B) une base de données (10) contenant des données concernant des unités de commande de moteur, laquelle base de données est accédée et mise à jour via Internet par un constructeur de l'unité de commande de moteur ;
C) un compilateur (11) pour générer le fichier de configuration à partir de paramètres de configuration sélectionnés et des données connexes concernant des unités de commande de moteur ;
D) une unité de transmission (12) pour envoyer le fichier de configuration via Internet.

9. Système selon la revendication 8, **caractérisé en ce que** l'interface utilisateur est un PC (4) avec le logiciel de navigateur Internet, **en ce que** l'unité de commande de moteur (1) communique avec le PC, **en ce que** le PC communique avec le serveur Internet (7) et **en ce qu'**un opérateur active les éléments A-D (8, 10, 11, 12) via le logiciel de navigateur Internet.

10. Système selon la revendication 8, **caractérisé en ce que** l'interface utilisateur (14) est placée sur l'unité de commande de moteur (1), ou dans une unité de communication portable extérieure à l'unité de commande de moteur, et **en ce que** les unités de programmation A-D (8, 10, 11, 12) du serveur Internet sont activées à partir de cette interface utilisateur.

11. Système selon l'une des revendications 8 à 10, **caractérisé en ce que** la base de données (10) incorpore des données spécifiques à l'application.
